# EUROPÄISCHE PATENTANMELDUNG

(11) **EP 1 447 388 A1**
(43) Veröffentlichungstag der Anmeldung: **18.08.2004**
(21) Anmeldenummer: 03100253.8
(22) Anmeldetag: 06.02.2003
(51) Int. Cl.: C03B 7/22, C03B 7/00

(54) **Verfahren und Vorrichtung zur Herstellung von Glasposten**

(71) Anmelder: Mettler-Toledo GmbH, 8606 Greifensee (CH)
(72) Erfinder: Hayoz, Othmar, 8902, Urdorf (CH); Lai, Van Xeng, 8050, Zürich (CH); Merino, David, 8004, Zürich (CH); Allenspach, Thomas, 5627, Besenbüren (CH)

(57) **Zusammenfassung**

Das erfindungsgemässe Verfahren und die Vorrichtung (1) dienen der Herstellung eines Glaskörpers, insbesondere eines mit einer Glasmembran (25) versehenen Glaskörpers (20) für einen chemischen Sensor, wobei ein verschiebbar gehaltenes, von einem gasförmigen Medium durchströmbares Tauchrohr (2) in eine Glasschmelze (4) eingetaucht und wieder herausgezogen wird, um einen Glasposten (24) zu entnehmen, der anschliessend durch Zufuhr des gasförmigen Mediums in die vorgesehene Form gebracht wird. Erfindungsgemäss wird das Tauchrohr (2) in eine Halterung (63) eingesetzt, die mit einem verschiebbar gelagerten Schlitten (80) verbunden ist, der anschliessend bis zu einer unteren Endposition (P1) verschoben wird, die anhand einer Einstellvorrichtung (13, 27) derart festgelegt wird, dass das Tauchrohr (2) beim Herunterfahren des Schlittens (80) in die Glasschmelze (4) eintaucht und beim Zurückfahren des Schlittens (80) einen zur Verarbeitung geeigneten Glasposten (24) entnimmt. Die ein- oder mehrteilige Einstellvorrichtung (13, 27) wird nach einer oder mehreren Entnahmen eines Glaspostens (24) um ein bestimmtes Mass manuell oder automatisch nachjustiert, um durch die Entnahme von Glasposten (24) verursachte Änderungen der Spiegelhöhe der Glasschmelze (4) zu kompensieren.

## Beschreibung

Die Erfindung betrifft ein Verfahren und eine Vorrichtung zur Herstellung von Glaskörpern nach dem Oberbegriff des Patentanspruchs 1 bzw. 10.

Die Erfindung betrifft insbesondere ein Verfahren und eine Vorrichtung zur Herstellung von Glaskörpern für chemische Sensoren, insbesondere pH-Elektroden, wie sie beispielsweise in den Produktblättern; [1], "Low-maintenance pH electrodes and systems" vom September 2002; [2], "InPro 2000 pH-Elektroden mit Flüssigelektrolyt und integriertem Temperaturfühler" vom Oktober 2000; oder [3], "InPro 3200(SG) pH-Elektroden mit Gelelektrolyt und integriertem Temperaturfühler" vom Januar 2002; der Mettler-Toledo GmbH, CH-8902 Urdorf beschrieben sind.

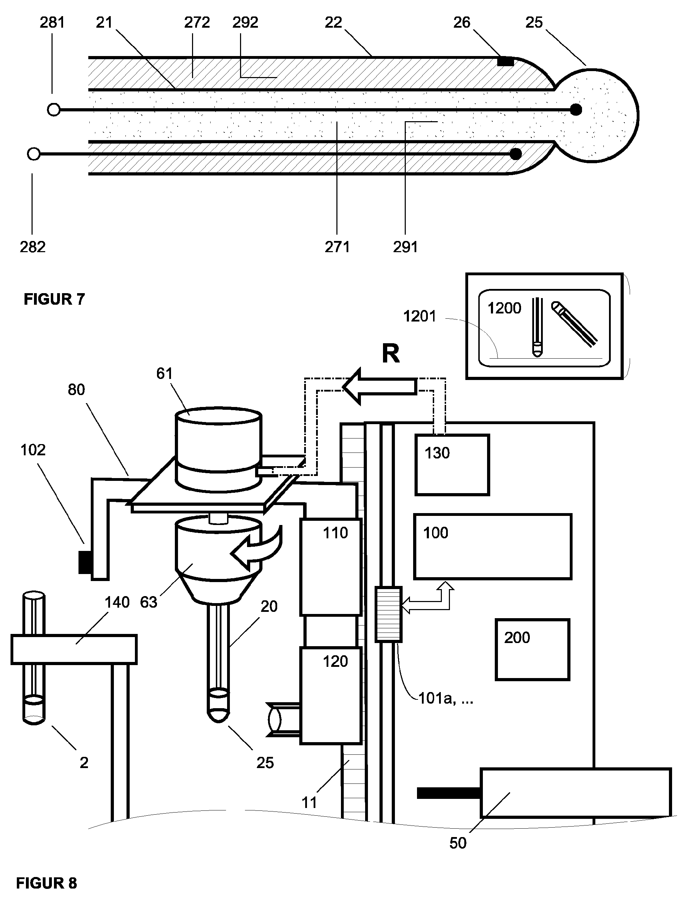

Der prinzipielle Aufbau der pH-Elektroden, die als Einstabmessketten eine Glaselektrode und eine Vergleichselektrode umfassen, ist in [2] und [3] sowie nachstehend in Figur 7 gezeigt. In der Einstabmesskette sind die mit einem Ableitelement 281 versehene Glaselektrode und die mit einem Bezugselement 282 versehene Vergleichselektrode konstruktiv zusammengebaut. Die Glaselektrode wird ringförmig von der Vergleichselektrode umgeben. Die Funktionsweise dieser pH-Elektroden ist in [4], Charles E. Mortimer, Chemie, Das Basiswissen der Chemie, 5. Auflage, Georg Thieme Verlag, New York 1987, Seiten 337-338 anhand des Versuchsaufbaus von Abbildung 20.9 beschrieben.

Das normalerweise aus Silber/Silberchlorid bestehende Ableitelement 281 ist in einer ersten Kammer 291 innerhalb eines Innenrohrs 21 und einer daran anschliessenden dünnwandigen Glashalbkugel bzw. Glasmembran 25 in eine Lösung mit definiertem pH-Wert bzw. einen Innenpuffer 271 getaucht (betreffend Pufferlösungen siehe [4], Seite 282), der die leitfähige Verbindung zwischen der Innenseite der Glasmembran 25 und dem Ableitelement 281 darstellt.

Die semipermeable Glasmembran 25 ist pH-sensitiv. An ihr erfolgt die Bildung eines Potentials, das ein direktes Mass für den pH-Wert der geprüften Lösung bzw. des Messguts ist. Sobald die pH-Elektrode in das Messgut eintaucht, beginnt die Glasmembran 25 an der Aussenseite zu quellen, d.h. Na⁺ wird durch H⁺ ersetzt. Die innere Seite ist ständig gequollen, da sie immer vom Innenpuffer 271 benetzt wird. Üblicherweise wird der pH-Wert des Innenpuffers bei pH7 eingestellt (neutral). In diese Quellschichten, die eine Stärke von < 0,0001 mm haben, können die Wasserstoffionen der Lösung bzw. die Ionen des Innenpuffers hinein diffundieren. Taucht die pH-Elektrode in das Messgut ein, das genau soviel Protonen hat wie der Innenpuffer 271, ist die Differenz der Ladungen zwischen Innenpuffer 271 und Messgut idealerweise gleich 0. Das bedeutet, an der pH-Elektrode entsteht kein Potential. Daraus kann abgeleitet werden, dass der pH-Wert des Messguts auch 7 ist. Hat das Messgut mehr oder weniger positive Ladungen als der Innenpuffer 271, ergibt sich eine Potentialdifferenz entsprechender Polarität.

Das Spannungspotential, das am Ableitelement 281 entsteht, wird mit dem am Bezugselement 282 entstehenden Spannungspotential verglichen, das unabhängig von der Ionenkonzentration im Messgut idealerweise konstant ist. Die Differenz zwischen den beiden Spannungspotentialen bildet das eigentliche Messsignal, das Auskunft über die Ionenkonzentration im Messgut gibt.

Das Bezugselement ist in einen Elektrolyten, normalerweise eine KCI-Lösung 272, eingetaucht und ionenmässig leitfähig mit diesem verbunden. Die in einer zweiten Kammer 292 zwischen der Aussenwand des Innenrohrs 21 und der Innenwand des Aussenrohrs 22 eingeschlossene KCI-Lösung 272 diffundiert langsam durch eine poröse Trennwand bzw. ein Diaphragma 26 in das Messgut und stellt dabei die elektrische Verbindung mit diesem her. Es ist wichtig, dass das Diaphragma 26 flüssigkeitsdurchlässig für die KCI-Lösung 272 ist, andererseits soll aber kein Messgut von aussen in die KCI-Lösung 272 eindringen. Das kann beispielsweise dadurch verhindert werden, dass der Spiegel der KCI-Lösung 272 immer höher gehalten wird als der Spiegel des Messguts. Ferner soll die Diffusion der KCl -Lösung 272 nach aussen möglichst hoch sein, damit ein kleiner elektrischer Innenwiderstand gewährleistet wird. Das Diaphragma 26 ist daher eine poröse, Trennstelle zwischen der KCI-Lösung 272 und dem Messgut, welche normalerweise unterschiedliche Ionenkonzentrationen aufweisen. Einerseits verhindert das Diaphragma 26, dass sich die Lösungen ausgleichen können, andererseits wird es jedoch von einem Ionenstrom durchflossen.

Die Glasmembran 25 besteht aus einem Spezialglas von beispielsweise 0,3-0,5 mm Stärke, das aus Gründen der mechanischen Stabilität vorzugsweise zu einer Halbkugel aufgeblasen wird. Dessen Zusammensetzung ist beispielsweise 72% SiO2, 22% Na2O und 6 % CaO, welche durch Zusammenschmelzen entsprechender Mengen SiO2, Na2CO3 und CaCO3 herstellbar ist.

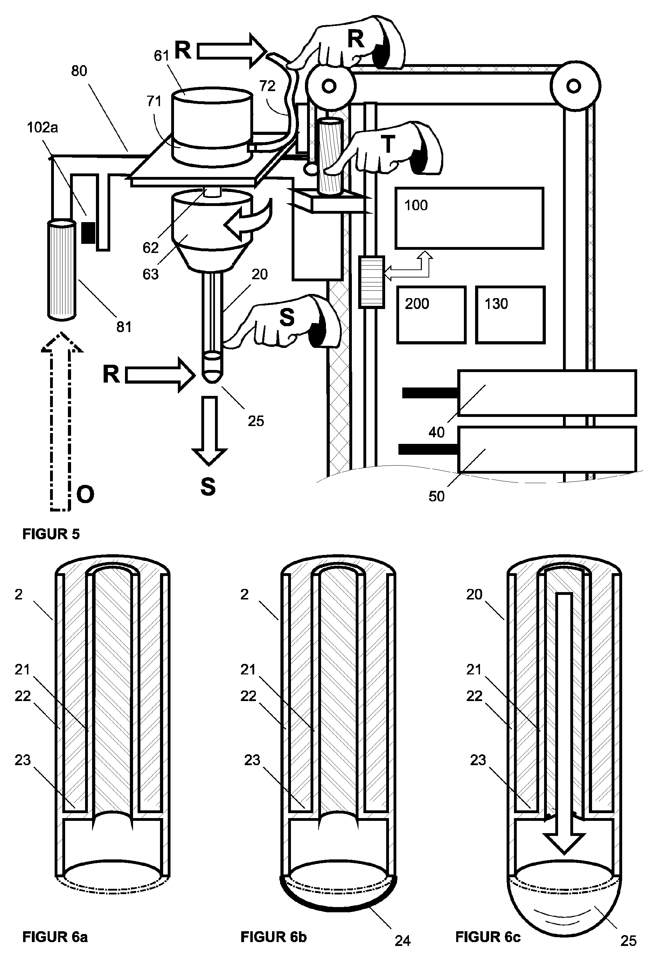

Zur Herstellung des Glaskörpers der pH-Elektroden wird vorzugsweise ein Tauchrohr 2 verwendet, das, wie in Figur 6a gezeigt, ein Aussenrohr 22 aufweist, dessen Innenwand mittels eines Tellers 23 derart mit einem Innenrohr 21 verbunden ist, dass eine erste, einseitig durch die Glasmembran 25 abzuschliessende erste Kammer 291 (siehe Figur 7) und eine zweite, einseitig durch den Teller 23 abgeschlossene Kammer 292 (siehe Figur 7) gebildet werden.

Zur Bildung der Glasmembran 25 wird das Tauchrohr 2 in einen Schmelztiegel geführt und eine kleine Menge geschmolzenen Glases, ein so genannter Glasposten 24 entnommen, der sich, wie in Figur 6b gezeigt, mit dem unteren Rand des Aussenrohrs 22 verbindet. Durch Zufuhr eines gasförmigen Mediums kann der Glasposten 24 zu einer dünnwandigen, halbkugelförmigen Glasmembran 25 geblasen werden, wodurch der in Figur 6c gezeigte Glaskörper 20 geschaffen wird.

Durch die wiederholte Entnahme von Glas aus dem Schmelztiegel ändert die Spiegelhöhe der darin enthaltenen Glasschmelze. Sofern jedes bearbeitete Tauchrohr 2 immer genau gleich tief in den Schmelztiegel eingetaucht wird, ändert daher die Menge des entnommenen Glases bzw. die Grösse des Glaspostens 24, der zur Glasmembran 25 geformt wird, wodurch pH-Elektroden mit unterschiedlichen Messeigenschaften resultieren.

In [5], DE 101 16 099 A1 wurde daher vorgeschlagen, das Erreichen der Oberfläche der Glasschmelze während des Absenkens des Tauchrohrs zu detektieren und dann das freie Ende des Tauchrohrs über eine festgelegte Eintauchtiefe in die Glasschmelze einzutauchen, so dass jeweils ein Glasposten mit bestimmter Grösse entnommen wird.

Aus [6], DE 101 16 075 C1 ist bekannt, die Spiegelhöhe der Glasschmelze zu messen und die der Verschiebung des Tauchrohrs dienende Stelleinrichtung so zu steuern, dass das freie Ende jedes Tauchrohrs über eine festgelegte Eintauchtiefe in die Glasschmelze eingetaucht wird.

Bei den aus [5] und [6] bekannten Verfahren und Vorrichtungen sind relativ aufwendige Messvorrichtungen notwendig, die korrekt eingestellt und regelmässig geprüft werden müssen. Vorteile dieser Vorrichtungen kommen vorbehaltlich nachstehender Feststellungen dabei erst beim vollautomatischen Betrieb zum Tragen.

Bei den aus [5] und [6] bekannten Verfahren und Vorrichtungen können jedoch noch weitere Probleme auftreten, die insbesondere bei vollautomatischem Betrieb hohe Kosten verursachen können. Durch die thermischen und mechanischen Einwirkungen bei der Bearbeitung sowie beim Einsetzen und Entfernen des Tauchrohrs können Teile davon abgesprengt werden, wodurch einerseits mangelhafte Produkte und andererseits Verunreinigungen der Glasschmelze auftreten können. Sofern dies nicht rechtzeitig erkannt oder vorzugsweise verhindert wird, entstehen erhebliche Folgekosten. Unter Umständen werden aufgrund der verunreinigten Glasschmelze weitere mangelhafte Glaskörper hergestellt. Sofern das Problem erkannt wird, muss die Glasschmelze ersetzt werden, was mit höheren Kosten und einem Betriebsunterbruch verbunden ist.

Der vorliegenden Erfindung liegt daher die Aufgabe zugrunde, ein verbessertes Verfahren und eine verbesserte Vorrichtung zur Herstellung von Glaskörpern zu schaffen.

Insbesondere ist eine kostengünstig aufgebaute, einfach handhabbare Vorrichtung zu schaffen, mittels derer Glaskörper von hoher Qualität geschaffen werden können. Weiterhin sind Verfahrensschritte und dazu korrespondierende Vorrichtungselemente anzugeben, mit denen die Fertigung von Glasmembranen und deren Verbindung mit einem Tauchrohr mit erhöhter Präzision und Qualität erfolgen kann.

Das erfindungsgemässe Verfahren soll dabei eine präzise Herstellung der Glaskörper erlauben, ohne dass die Spiegelhöhe der Glasschmelze kontinuierlich gemessen oder detektiert werden muss.

Ferner sind Verfahrensschritte und dazu korrespondierende Vorrichtungselemente anzugeben, mit denen Prozessfehler und Produktemängel bei der Herstellung der Glaskörper erkannt und/oder vermieden werden.

Diese Aufgabe wird mit einem Verfahren und einer Vorrichtung gelöst, welche die in Anspruch 1 bzw. 10 angegebenen Merkmale aufweisen. Vorteilhafte Ausgestaltungen der Erfindung sind in weiteren Ansprüchen angegeben.

Das erfindungsgemässe Verfahren und die Vorrichtung dienen der Herstellung eines Glaskörpers, insbesondere eines mit einer Glasmembran versehenen Glaskörpers für einen chemischen Sensor, wobei ein verschiebbar gehaltenes, von einem gasförmigen Medium durchströmbares Tauchrohr in eine Glasschmelze eingetaucht und wieder herausgezogen wird, um einen Glasposten zu entnehmen, der anschliessend durch Zufuhr des gasförmigen Mediums in die vorgesehene Form gebracht wird.

Erfindungsgemäss wird das Tauchrohr in eine Halterung eingesetzt, die mit einem verschiebbar gelagerten Schlitten verbunden ist, der anschliessend bis zu einer unteren Endposition verschoben wird, die anhand einer Einstellvorrichtung derart festgelegt wird, dass das Tauchrohr beim Herunterfahren des Schlittens in die Glasschmelze eintaucht und beim Zurückfahren des Schlittens einen zur Verarbeitung geeigneten Glasposten entnimmt.

Die ein- oder mehrteilige Einstellvorrichtung wird nach einer oder mehreren Entnahmen eines Glaspostens um ein bestimmtes Mass manuell oder automatisch nachjustiert, um eine Änderung der Spiegelhöhe der Glasschmelze, die durch die Entnahme von Glasposten verursacht wurde, zu kompensieren.

Die Spiegelhöhe der Glasmasse wird mit der vorliegenden Vorrichtung daher nicht gemessen, sondern es wird mit dem ersten Tauchrohr eine optimale Entnahme eines Glaspostens gesucht. Dabei ist von Vorteil, dass bereits zu Beginn des Arbeitsprozesses eine optimale Einstellung der Vorrichtung gefunden wird, so dass oft bereits das erste Tauchrohr, praktisch ausnahmslos zumindest das zweite Tauchrohr zu einem optimalen Glaskörper verarbeitet werden kann.

Aufgrund gesammelter Erfahrungen ist bekannt, wie sich die Spiegelhöhe der Glasmasse nach einer oder mehreren Entnahmen eines Glaspostens verändert. Nach der optimalen Einstellung der Vorrichtung anhand des ersten Tauchrohrs wird die Einstellvorrichtung nach einer oder mehreren Entnahmen eines Glaspostens daher manuell oder automatisch um ein bestimmtes Mass nachjustiert, so dass die Grösse der sequentiell entnommenen Glasposten konstant bleibt.

Messfehler, die gegebenenfalls durch äussere Einflüsse verursacht werden können, und daraus resultierende Qualitätsveränderungen der gefertigten Glaskörper werden daher vermieden. Ferner wird der Kostenaufwand für die Beschaffung und Eichung der Messvorrichtungen vermieden.

Die Einstellvorrichtung umfasst vorzugsweise ein ortsfestes oder an einer wählbaren Endposition ortsfest fixierbares unteres Begrenzungselement und eine mit dem unteren Begrenzungselement oder dem Schlitten verbundene Distanzeinstellvorrichtung, mittels derer der Abstand zwischen dem unteren Begrenzungselement und dem gegen das untere Begrenzungselement gefahrenen Schlitten und somit die untere Endposition des Schlittens einstellbar ist. Die Einstellvorrichtung wird bei Inbetriebnahme der Vorrichtung derart eingestellt, dass der Schlitten jeweils angehalten wird, bevor das zu bearbeitende Ende des Tauchrohrs in die Glasschmelze eintaucht. Mittels der fein justierbaren Distanzeinstellvorrichtung kann die fehlende Distanz sodann präzise nachjustiert werden.

Vorzugsweise ist zusätzlich ein ortsfestes oder ortsfest fixierbares oberes Begrenzungselement vorgesehen, gegen das der Schlitten mittels eines Zugelements, vorzugsweise ein Gewicht oder eine Feder, in eine obere Endposition gezogen und stabil gehalten wird, in der das zu bearbeitende Tauchrohr einsetzbar und der gefertigte Glaskörper entnehmbar ist. Der Schlitten ist daher zwischen der unteren und oberen Endposition, beispielsweise entlang einer Führungsschiene verschiebbar.

In einer weiteren vorzugsweisen Ausgestaltung ist ein vor- und zurückfahrbares Referenzelement vorgesehen, welches nach dem Ausfahren die Sollposition des eingesetzten Tauchrohrs, vorzugsweise die Sollhöhe des in die Glasschmelze einzutauchenden Teils des Tauchrohrs anzeigt, so dass dieses entsprechend positionierbar ist. Dadurch wird verhindert, dass Tauchrohre, die gegebenenfalls voneinander abweichende Abmessungen aufweisen, innerhalb der Halterung unterschiedlich positioniert und dadurch unterschiedlich tief in die Glasschmelze eingetaucht werden. Diese Lösung ist natürlich auch dann vorteilhaft einsetzbar, wenn die Spiegelhöhe der Glasschmelze gemessen und die Halterung entsprechend den vorliegenden Messresultaten verschoben wird.

In einer weiteren vorzugsweisen Ausgestaltung ist eine vorund zurückfahrbare Heizvorrichtung, vorzugsweise ein Brenner, vorgesehen, die gegen das in die Glasschmelze einzutauchende Teil des Tauchrohrs geführt wird und dieses während einer bestimmbaren oder vorbestimmten Zeitdauer erwärmt. Aufgrund der Endpositionierung des Tauchrohrs mittels des Referenzelements wird dabei stets präzise das zu bearbeitende Teil des Tauchrohrs erwärmt. Die Erwärmung des in die Glasschmelze einzutauchenden Teils des Tauchrohrs erlaubt eine problemlosere Aufnahme des Glaspostens. Einerseits werden mögliche Glasbrüche und somit Verunreinigungen der Glasschmelze weitgehend vermieden. Andererseits resultiert eine verbesserte Verbindung des aufgenommenen Glaspostens mit dem Tauchrohr.

In einer weiteren vorzugsweisen Ausgestaltung ist eine Antriebseinheit vorgesehen, die vorzugsweise mittels einer koaxial zur Längsachse eines eingesetzten Tauchrohrs ausgerichteten Antriebswelle mit der Halterung verbunden und derart steuerbar ist, dass die Halterung in der oberen Endposition, während des Erwärmens des Tauchrohrs, oder nach der Entnahme und/oder während des Formens des Glaspostens drehbar ist. Dadurch wird eine gleichmässige Bearbeitung des Tauchrohrs bzw. eine gleichmässige Verteilung des Glaspostens bewirkt.

Die Zufuhr des gasförmigen Mediums erfolgt vorzugsweise durch einen mit Ein- und Austrittsöffnungen versehenen Innenkanal in der Antriebswelle, welche mittels Dichtungselementen mit dem Tauchrohr und einem Druckzylinder verbunden ist, durch den das gasförmige Medium der oder den Eintrittsöffnungen zuführbar ist.

Der Druck des dem Tauchrohr von einer Pumpvorrichtung zugeführten gasförmigen Mediums ist während des Formens des Glaspostens vorzugsweise prüfbar, so dass beim Auftreten eines durch Glasbruch verursachten Druckabfalls ein Steuersignal abgebbar ist, mittels dessen ein Fehler registrierbar ist. Dadurch kann verhindert werden, dass mangelhafte Glaskörper weiter verarbeitet werden, oder Glassplitter unentdeckt in die Glasschmelze fallen, und diese verunreinigen.

In einer weiteren vorzugsweisen Ausgestaltung ist ein vor- und zurückfahrbares Abdeckelement vorgesehen, das über die Glasschmelze geführt und vorzugsweise nur dann zurück gefahren wird, wenn der Schlitten gegen die untere Endposition geführt oder neues Rohmaterial in den Schmelztiegel eingeführt wird. Die Steuerung des Abdeckelements erfolgt vorzugsweise in Abhängigkeit von Ausgangssignalen wenigstens eines Sensors, welcher die Bewegungen des Schlittens überwacht. Beispielsweise ist der Sensor in der Nähe der oberen Endposition positioniert.

Die erfindungsgemässe Vorrichtung kann mit einem geringen oder hohen Automatisierungsgrad realisiert werden. Beispielsweise sind manuell bedienbare Schalter vorgesehen, mit denen die Antriebseinheit und/oder Antriebsvorrichtungen steuerbar sind, mit denen das Referenzelement, die Heizvorrichtung und gegebenenfalls das Abdeckelement vor- und zurückfahrbar sind.

Der Verfahrenbsablauf kann jedoch auch gesteuert durch ein Programm erfolgen, welches Zustandsänderungen der Vorrichtung erfasst, die der Steuereinheit durch manuell oder automatisch betätigte Schalter oder durch Sensoren gemeldet werden.

Nachfolgend wird die Erfindung anhand von Zeichnungen näher erläutert. Dabei zeigt:
- Figur 1: in vorzugsweiser Ausgestaltung eine erfindungsgemässe Vorrichtung 1 während der Inbetriebnahme,
- Figur 2: ausschnittweise die Vorrichtung 1 von Figur 1 bei der Endpositionierung eines Tauchrohrs 2 in einer mit einem Schlitten 80 verbundenen Halterung 63 anhand eines Referenzelements 42,
- Figur 3: ausschnittweise die Vorrichtung 1 von Figur 1 nach dem Einschalten einer zum Drehen der Halterung 63 vorgesehenen Antriebseinheit 61 und nach dem Betätigen einer Heizvorrichtung 52,
- Figur 4: die Vorrichtung 1 von Figur 1 mit nach unten gefahrenem Schlitten 80, dessen Endposition mittels einer auf ein unteres Begrenzungselement 13 gestützten Distanzeinstellvorrichtung 27 derart justiert wird, dass das Tauchrohr 2 um das erforderliche Mass in eine Glasschmelze 4 eintaucht,
- Figur 5: die Vorrichtung 1 von Figur 1 mit nach oben gefahrenem Schlitten 80, während der Formung eines aus der Glasschmelze 4 entnommenen Glaspostens 24,
- Figur 6a: ein Tauchrohr 2 vor der Entnahme eines Glaspostens 24,
- Figur 6b: das Tauchrohr 2 von Figur 6a nach der Entnahme eines Glaspostens 24,
- Figur 6c: das Tauchrohr 2 von Figur 6b mit einer durch Formung des Glaspostens 24 gefertigten Glasmembran 25,
- Figur 7: eine bekannte pH-Elektrode, und
- Figur 8: eine vollautomatisierte erfindungsgemässe Vorrichtung 1 mit motorisiertem Schlitten 80 sowie einer Kamera 120.

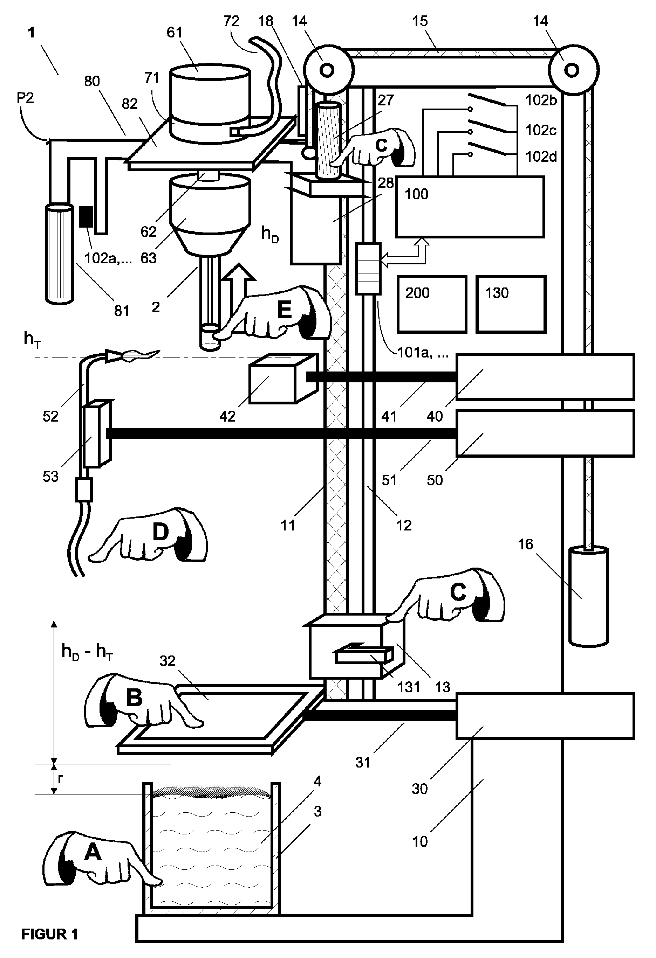

Die erfindungsgemässe Vorrichtung 1 und das erfindungsgemässe Verfahren werden anhand der Figuren 1 bis 5 erläutert. Die Verfahrensschritte sind mit A, ..., T gekennzeichnet und durch Darstellung einer Hand symbolisiert.

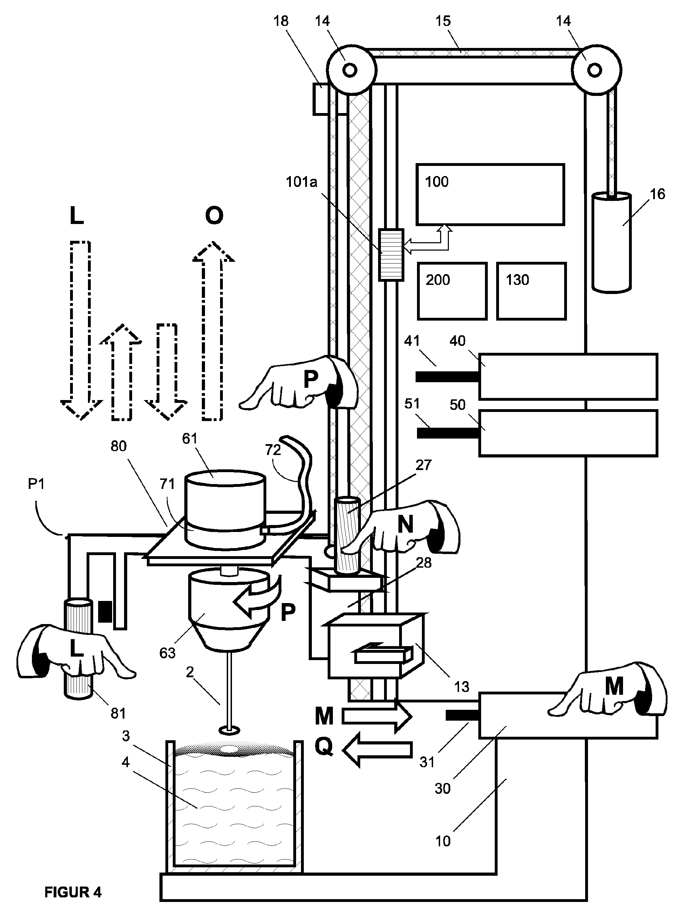

Figur 1 zeigt eine erfindungsgemässe Vorrichtung 1 in vorzugsweiser Ausgestaltung mit einem Montagegerüst 10, welches mit einer Führungsschiene 11 versehen ist, entlang der ein Schlitten 80 zwischen einem unteren und einem oberen Begrenzungselement 13; 18 verschiebbar gelagert ist, durch die eine untere und eine obere Endposition P1 bzw. P2 (siehe Figur 1 und Figur 4) für den Schlitten 80 festgelegt werden. In Figur 1 ist der Schlitten 80 in der oberen Endposition P2 gezeigt. In dieser Endposition P2 wird er mittels eines frei hängenden Gewichts 16 gehalten, das durch ein über Umlenkrollen 14 geführtes Seil 15 mit dem Schlitten 80 verbunden ist. Das Gewicht 16 ist derart gewählt, dass der Schlitten 80 in der oberen Endposition P2 stabil gehalten wird und nur mit geringem Kraftaufwand in die untere Endposition P1 gezogen werden kann, in der das Tauchrohr 2 in eine in einem Schmelztiegel 3 vorgesehene Glasschmelze 4 eintauchen kann.

Der Schlitten 80, der an einem Handgriff 81 erfasst werden kann, ist mit einer Montageplatte 82 versehen, auf der eine Antriebseinheit 61 angeordnet ist, welche mittels einer senkrecht ausgerichteten Antriebswelle 62 mit einer unterhalb der Montageplatte 82 vorgesehenen Halterung 63 verbunden ist, in die koaxial zur Antriebswelle 62 ein Tauchrohr 2 eingesetzt ist.

Die Zufuhr des gasförmigen Mediums erfolgt durch einen gegebenenfalls mit einer Pumpvorrichtung 130 verbundenen oder von einem Anwender bedienten Schlauch 72, der mit einem abgedichteten Transferzylinder 71 verbunden ist, innerhalb dem die mit einem Innenkanal versehene Antriebswelle 62 derart drehbar angeordnet ist, dass eine dicht abgeschlossene Kammer gebildet wird, innerhalb der das gasförmige Medium in wenigstens eine Eintrittsöffnung in den Innenkanal einführbar ist. Durch den Innenkanal der Antriebswelle 62 und die gegebenenfalls mit einem Dichtungselement versehene Halterung 63 ist das gasförmige Medium in das eingesetzte Tauchrohr 2 einführbar.

Der Schlitten 80 ist ferner mit einer Distanzeinstellvorrichtung 27 versehen, mittels derer ein auf das untere Begrenzungselement 13 ausgerichteter Kolben 28 senkrecht verschiebbar ist. Das untere Begrenzungselement 13 ist in einer Führungsnut 12 verschiebbar gelagert und kann mit einem Hebel 131 in einer gewählten Endposition fixiert werden.

In Figur 1 sind ferner drei beispielsweise pneumatisch arbeitende Antriebsvorrichtungen 30, 40, 50 gezeigt, die Zylinder mit vor- und zurückfahrbaren Kolben 31, 41, 51 aufweisen.

Der Kolben 31 der untersten Antriebsvorrichtung 30 ist mit einem Abdeckelement 32 verbunden, das über die Glasschmelze 4 geführt und, vorzugsweise gesteuert in Abhängigkeit von Sensoren 101a, 101b, ... abgegebenen Signalen, nur dann zurück gefahren wird, wenn der Schlitten 80 gegen die untere Endposition P1 geführt wird. Die Glasschmelze 4 bleibt daher geschützt vor herunter fallenden Fremdkörpern, beispielsweise Teilen des eingesetzten Tauchrohrs 2 bzw. Glaskörpers 20, die bei den auszuführenden Manipulationen brechen können. Aufgrund der hohen Anforderungen an die für die Fertigung der Glasmembranen 25 erforderliche Qualität der Materialzusammensetzung der Glasschmelze 4 muss ansonsten die Glasschmelze 4 ersetzt werden, was mit relativ hohem Materialund Zeitaufwand verbunden ist.

Der Kolben 41 der obersten Antriebsvorrichtung 40 trägt ein Referenzelement 42, welches nach dessen Ausfahren die Sollposition eines eingesetzten Tauchrohrs 2 anzeigt. Von Bedeutung ist dabei die Lage des zu bearbeitenden Teils des Tauchrohrs 2, welches exakt an die durch das Referenzelement 42 angezeigte Endposition zu bringen ist. Nach der Einstellung der Vorrichtung 1 sind nämlich nur noch die Änderungen der Spiegelhöhe der Glasschmelze 4 sowie Änderungen der Lage und Grösse der Tauchrohre 2 zu berücksichtigen. Sofern ein eingesetztes Tauchrohr 2 innerhalb der Halterung 63 an einen festen Anschlag gedrückt wird, ist die Lage des eingespannten Teils des Tauchrohrs 2 stets gleich. Die Tauchrohre 2 weisen jedoch relativ hohe Fertigungstoleranzen auf, so dass auch bei korrekter Endpositionierung des Tauchrohrs 2 in der Halterung 63 dessen zu bearbeitendes Endstück von der Sollposition abweichen kann. Dieses Problem wird durch Verwendung des Referenzelements 42 behoben.

Vorzugsweise wird das zu bearbeitende Endstück des Tauchrohrs 2 vor dem Eintauchen in die Glasschmelze 4 gleichmässig erwärmt, um eine problemlose Aufnahme des Glaspostens 24 zu gewährleisten und ein mögliches, durch hohe Temperaturänderungen verursachtes Brechen des Tauchrohrs 2 während des Eintauchens in die Glasschmelze 4 zu verhindern. Dazu ist der Kolben 51 der weiteren Antriebsvorrichtung 50 mittels eines Montageelements 53 mit einem Brenner 52 verbunden, dessen Flamme auf der Höhe des Referenzelements 42 bzw. der Höhe der Sollposition des zu bearbeitenden Teils eines eingesetzten Tauchrohrs 2 liegt. Mittels der zugehörigen Antriebsvorrichtung 50 kann der Brenner 52 daher gegen das zu bearbeitende Teil des eingesetzten Tauchrohrs 2 gefahren werden, um dieses zu erwärmen.

Um das zu bearbeitende Teil des eingesetzten Tauchrohrs 2 gleichmässig zu erwärmen, wird die Antriebseinheit 61 mittels eines Schalters 102a in Betrieb gesetzt, der zu dessen einfachen Handhabung nahe dem Handgriff 81 angeordnet ist. Nach Inbetriebsetzung der Antriebseinheit 61 rotiert das Tauchrohr 2 um dessen Längsachse, so dass dieses gleichmässig erwärmt wird.

Die Antriebseinheit 61 wird vorzugsweise auch nach der Entnahme und/oder während der Bearbeitung eines Glaspostens 24 in Betrieb gesetzt, so dass sich dessen Masse gleichmässig verteilt und eine optimal geformte Glasmembran 25 bildet (siehe die Figuren 6a bis 6c).

In Figur 1 sind ferner manuell oder bei der Bewegung von Vorrichtungsteilen automatisch betätigbare Schalter 102b, 102c, 102d, ... und Sensoren 101a, 101b, 101c, ... symbolisch dargestellt. Mittels dieser Schalter 102b, 102c, 102d und Sensoren 101a, 101b, 101c, ... lässt sich der Fertigungsprozess steuern. Der Schalter 102b dient beispielsweise der Aktivierung der Antriebsvorrichtung 30 und wird durch den fahrenden Schlitten 80 automatisch betätigt. Die Schalter 102c und 102d dienen zur Aktivierung der Antriebsvorrichtungen 40, 50 und können von Hand oder mittels Fussdruck betätigt werden. Symbolisch dargestellt ist ferner eine Stromversorgungseinheit 200.

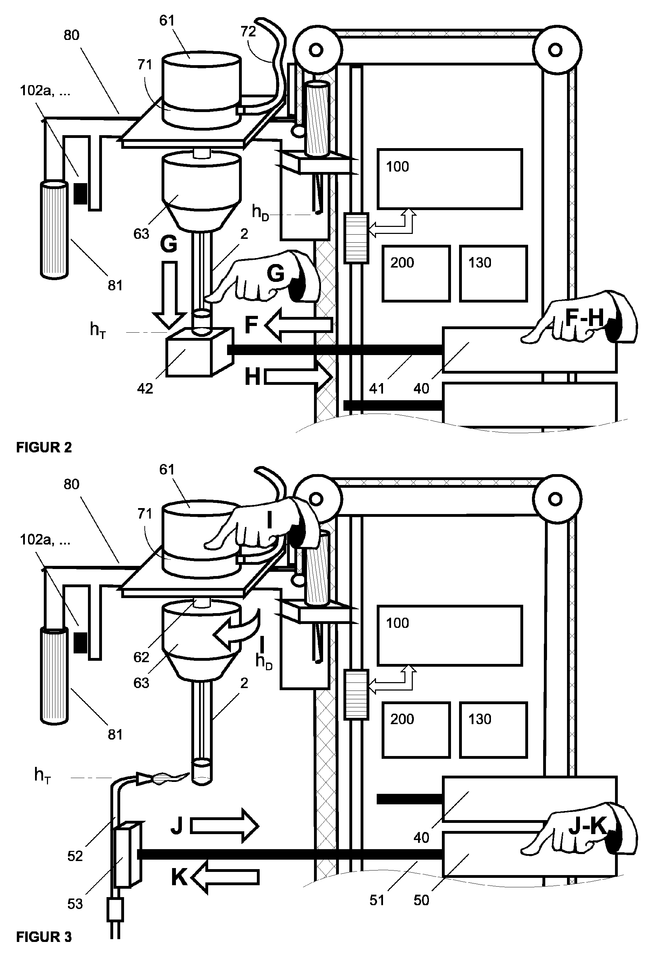

Anhand von Figur 1 wird nachstehend die Inbetriebnahme der erfindungsgemässen Vorrichtung 1 mittels Verfahrensschritten A bis E erläutert. Die weiteren Verfahrensschritte F bis T werden anhand der Figuren 2 bis 5 erläutert.

Zuerst wird Glas im Schmelztiegel 3 geschmolzen (Schritt A). Anschliessend wird das Abdeckelement 32 über die Glasschmelze 4 gefahren, so dass bei den weiteren Manipulationen keine Fremdkörper in die Glasschmelze 4 fallen können (Schritt B).

Sofern nicht bereits richtig positioniert, werden das untere Begrenzungselement 13 und die Distanzeinstellvorrichtung 27 derart justiert, dass der Schlitten 80 in die untere Endposition P1 gefahren werden kann, ohne dass ein eingesetztes Tauchrohr 2 in die Glasschmelze 4 eintaucht (Schritt C). Der Abstand zwischen der ursprünglichen Höhe h_{D} des durch die Distanzeinstellvorrichtung 27 gebildeten Anschlags und der Höhe h_{T} des Referenzelements 42 soll daher etwa der Distanz zwischen dem Anschlag des unteren Begrenzungselements 13 und dem oberen Rand des Schmelztiegels 3 entsprechen, so dass ein Restabstand r zur Spiegelhöhe der Glasschmelze 4 verbleibt. Wie in Figur 4 gezeigt, kann dieser Restabstand r durch Justieren der Distanzeinstellvorrichtung 27 in einem späteren Verfahrensschritt (siehe Figur 4, Schritt N) aufgehoben werden.

Mit optionalem Schritt D wird der Brenner 52 eingeschaltet, wonach durch Einsetzen eines Tauchrohrs 2 in die Halterung 63, beispielsweise in ein Mehrbackenfutter, (Schritt E) die Vorbereitungen für die Justierungsarbeiten abgeschlossen werden.

Wie in Figur 2 gezeigt, wird anschliessend das Referenzelement 42 ausgefahren (Schritt F), das Tauchrohr 2 auf dessen Sollhöhe h_{T} positioniert (Schritt G) und das Referenzelement 42 zurückgefahren (Schritt H).

Figur 3 zeigt weitere optionale Verfahrensschritte. Mit Schritt I wird die Antriebseinheit 61 in Betrieb gesetzt, welche die Halterung 63 mit dem eingesetzten Tauchrohr 2 um dessen Längsachse rotiert. Anschliessend wird mit Schritt J der Brenner 52 auf der Höhe h_{T} gegen das Tauchrohr 2 gefahren, so dass das in die Glasschmelze 4 einzutauchende Teil des Tauchrohrs 2 gleichmässig erwärmt wird, wonach der Brenner 52 wieder zurück gefahren wird (Schritt K).

Wie in Figur 4 gezeigt, wird der Schlitten 80 anschliessend am Handgriff 81 erfasst und in die untere Endposition P1 gefahren, d.h. soweit, bis die Distanzeinstellvorrichtung 27 auf das untere Begrenzungselement 13 auftrifft. Vor dem Erreichen der unteren Endposition P1 wird die Verschiebung des Schlittens 80 durch den Sensor 101a detektiert, so dass durch automatische Betätigung des Schalters 102b das Abdeckelement 32 zurück gezogen wird (Schritt M).

Durch Justieren der Distanzeinstellvorrichtung 27 wird nun der Schlitten 80 mit dem Tauchrohr 2 soweit abgesenkt, bis ein geeigneter Glasposten 24 aus der Glasschmelze 4 entnommen werden kann (Schritt N). Bei der Justierung der Vorrichtung 1 oder auch beim späteren Betrieb kann das Tauchrohr 2 auch mehrfach in die Glasschmelze 4 abgesenkt werden.

Nach Entnahme eines Glaspostens 24 wird der Schlitten 80 wieder angehoben (Schritt O) und vorzugsweise die Antriebseinheit 61 wieder in Betrieb gesetzt (Schritt P), so dass die Masse des Glaspostens 24 durch Rotation gleichmässig verteilt wird. Nach Entnahme des Glaspostens 24 wird zum Schutz der Glasschmelze 4 das Abdeckelement 32 wieder vorgefahren.

Figur 5 zeigt die Formung der Glasmembran 25 durch Zufuhr des gasförmigen Mediums. Beispielsweise wird Luft in den Schlauch 72 geblasen oder dieser ist an die Pumpvorrichtung 130 angeschlossen (Schritt R). Durch Überwachung des Drucks kann dabei ein gegebenenfalls auftretender Glasbruch detektiert werden. Anschliessend wird der gefertigte Glaskörper 20 entnommen (Schritt S).

Abschliessend wird die Distanzeinstellvorrichtung 27 nach einer oder mehreren Entnahmen eines Glaspostens 24 um ein bestimmtes Mass manuell oder automatisch nachjustiert (Schritt T), um eine Änderung der Spiegelhöhe der Glasschmelze 4, die durch die Entnahme von Glasposten 24 verursacht wurde, zu kompensieren.

Bei pH-Elektroden ist der Innenwiderstand der Spannungsquelle extrem hoch, weshalb aufwendige elektronische Mess- und Verstärkerschaltungen notwendig sind, um das Spannungssignal überhaupt anzeigen zu können. Der elektrische Innenwiderstand der Messelektrode liegt, bedingt durch die Glasmembran 25, bei etwa 10⁹ Ohm. Erfindungsgemäss wurde festgestellt, dass durch entsprechende, möglichst dünnwandige Ausgestaltung der Glasmembran 25 der Innenwiderstand der Messelektrode deutlich reduziert werden kann, wodurch präzisere Messungen sowie einfachere Messschaltungen realisierbar sind. Besonderes wesentlich ist dabei, dass die Glasmembran 25 eine möglichst gleichmässige, geringe Dicke aufweist. Dies wird erreicht, indem das Tauchrohr 2 nach Entnahme des Glaspostens 24 derart gedreht wird, dass dessen Achse nicht mehr vertikal ausgerichtet ist. Vorzugsweise wird das Tauchrohr 2 um etwa 135° nach oben geschwenkt und anschliessend, während axialer Rotation, mittels Zufuhr des gasförmigen Mediums bearbeitet. Aufgrund der durch die axiale Rotation des Glasrohrs 2 verursachten Fliehkräfte sowie die auf den Glasposten 24 einwirkende Schwerkraft kann dessen klumpenförmige Masse gleichmässig hin zu den Rändern des Tauchrohrs 2 fliessen, wodurch im zentralen Teil der Glasmembran 25 eine gleichmässig dünne Wand geschaffen wird. Dieses Verfahren kann selbstverständlich auch bei anderen Vorrichtungen, beispielsweise den in [5] und [6] beschriebenen Vorrichtungen angewendet werden.

Die Drehung des Tauchrohrs 2 aus der vertikalen Ausrichtung kann mit einfachen Mitteln geschehen. Beispielsweise wird die Montageplatte 82 mittels eines Gelenks mit dem Schlitten 80 verbunden, so dass die Montageplatte 82 nach Entnahme des Glaspostens 24 um das erforderliche Mass gedreht bzw. umgeklappt werden kann. Die wird vorzugsweise durch pneumatische Mittel oder durch einen weiteren, vorzugsweise auf dem Schlitten 80 angeordneten Antriebsmotor bewirkt. Möglich ist ferner die Verwendung eines Roboterarms, der das Tauchrohr 2 halten und durch Drehen und Verschieben in die erforderlichen Positionen bringen kann.

Die Figuren 6a bis 6c zeigen das Tauchrohr 2 vor der Entnahme eines Glaspostens 24, nach der Entnahme eines Glaspostens 24, und nach der Fertigung der Glasmembran 25.

Figur 7 zeigt die einleitend beschriebene bekannte pH-Elektrode.

Die erfindungsgemässe Vorrichtung 1 und das erfindungsgemässe Verfahren wurden in bevorzugten Ausgestaltungen beschrieben und dargestellt. Anhand der erfindungsgemässen Lehre sind jedoch weitere fachmännische Ausgestaltungen realisierbar. Insbesondere ist die Abfolge einzelner Verfahrensschritte umkehrbar. Ferner kann der Automatisierungsgrad der Vorrichtung nach Bedarf gewählt werden.

Figur 8 zeigt eine vollautomatisierte erfindungsgemässe Vorrichtung 1 mit einem Schlitten 80, der einen Antriebsmotor 110, vorzugsweise einen Schrittmotor, sowie eine Kamera 120 trägt. Der Antriebsmotor 110, der auch durch Antriebsmittel, Ketten oder Seile, mit dem Schlitten 80 verbunden sein kann, treibt beispielsweise ein Zahnrad an, das in die mit einer Verzahnung versehene Führungsschiene 11 eingreift.

Der Schlitten 80 kann daher gesteuert durch die Steuereinheit 100 von der oberen in die untere Endposition P2 bzw. P1 (siehe die Figuren 1 und 4) gebracht werden, ohne dass mechanische Einstellvorrichtungen benötigt werden. Die obere Endposition P2 kann beispielsweise durch einen optischen Sensor 101b festgelegt werden. Die untere Endposition P1 kann durch Vorgabe der Anzahl Drehungen der Antriebswelle bzw. Vorgabe der Anzahl Schritte des Antriebsmotors 110 festgelegt werden. Durch Inkrementierung der Anzahl Drehungen der Antriebswelle bzw. Anzahl Schritte des Antriebsmotors 110 kann die untere Endposition P1 an Änderungen der Spiegelhöhe der Glasschmelze 4 angepasst werden.

Mittels der Kamera 120 kann die Verformung der Glasmembran 25 aufgenommen und mit Sollwerten verglichen werden, so dass die Formung der Gasmembran 25 automatisch durchgeführt werden kann. Das Tauchrohr 2 wird vorzugsweise, wie in [5] und [6] beschrieben, mit einem Blasdruck beaufschlagt, welcher einer Blasdruckkurve folgt, die in einem in der Steuereinheit 100 vorgesehenen Rechner abgelegt ist.

Die Glasrohre 2 werden dabei vorzugsweise mittels eines mit der Steuereinheit 100 verbundenen Automaten 140 zu- und weggeführt, der vorzugsweise auch zum vertikalen Positionieren der in die Halterung eingeführten oder eingesetzten Glasrohre 2 geeignet ist. Die vertikale Positionierung erfolgt vorzugsweise automatisch mittels der von der Kamera 120 aufgenommenen Bilddaten, so dass auf die Verwendung eines Referenzobjekts 42 verzichtet werden kann. Referenzdaten können ferner im Automaten 140 vorgesehen sein, so dass dieser die Tauchrohre 2 jeweils korrekt positioniert. Zur manuellen Positionierung der Tauchrohre 2 können die von der Kamera 120 aufgenommenen Bilder, versehen mit einer Referenzlinie 1201, auch auf einer Bildausgabeeinheit 1200, beispielsweise einem Flachbildschirm angezeigt werden. Der Anwender kann in diesem Fall ein eingesetztes Tauchrohr 2 derart vertikal verschieben, bis dessen Unterkante mit der Referenzlinie 1201 übereinstimmt. Die präzise Positionierung der Unterkante der Tauchrohre 2 mittels der Kamera 120 resultiert ferner in einer jeweils genau gleichen Aufnahme der zu formenden Glasmembranen 25, wodurch ein einfacherer und präziserer Vergleich mit den Solldaten erfolgen kann.

### Bezugszeichenliste

- 1: Vorrichtung
- 2: Tauchrohrs
- 3: Schmelztiegel
- 4: Glasschmelze
- 10: Montagegerüst
- 11: Führungsschiene
- 12: Führungsnut
- 13: unteres Begrenzungselement
- 14: Umlenkrollen
- 15: Seil
- 16: Gewicht
- 18: oberes Begrenzungselement
- 20: Glaskörper
- 21: Innenrohr
- 22: Aussenrohr
- 23: Teller
- 24: Glasposten
- 25: Glasmembran
- 26: Diaphragma
- 27: Distanzeinstellvorrichtung
- 28: Kolben
- 30: Antriebsvorrichtung
- 31: Kolben
- 32: Abdeckelement
- 40: Antriebsvorrichtung
- 41: Kolben
- 42: Referenzelement
- 50: Antriebsvorrichtung
- 51: Kolben
- 52: Heizvorrichtung, Brenner
- 53: Montageelement
- 61: Antriebseinheit
- 62: Antriebswelle
- 63: Halterung
- 71: Transferzylinder
- 72: Schlauch
- 81: Handgriff
- 82: Montageplatte
- 100: Steuereinheit
- 101a, ...: Sensoren
- 102a, ...: Schalter
- 110: Antriebsmotor
- 120: Kamera
- 130: Pumpvorrichtung
- 131: Hebel
- 140: Automaten
- 200: Stromversorgungseinheit
- 271: Innenpuffer
- 272: KCI-Lösung
- 281: Ableitelement
- 282: Bezugselement
- 291: erste Kammer
- 292: zweiten Kammer
- 1200: Bildausgabeeinheit
- 1201: Referenzlinie

### Literaturverzeichnis

[1] Produktblatt "Low-maintenance pH electrodes and systems" der Mettler-Toledo GmbH, CH-8902 Urdorf vom September 2002
[2] Produktblatt "InPro 2000 pH-Elektroden mit Flüssigelektrolyt und integriertem Temperaturfühler" der Mettler-Toledo GmbH, CH-8902 Urdorf vom Oktober 2000
[3] Produktblatt "InPro 3200(SG) pH-Elektroden mit Gelelektrolyt und integriertem Temperaturfühler" der Mettler-Toledo GmbH, CH-8902 Urdorf vom Januar 2002
[4] Charles E. Mortimer, Chemie, Das Basiswissen der Chemie, 5. Auflage, Georg Thieme Verlag, New York 1987
[5] Offenlegungsschrift DE 101 16 099 A1
[6] Patentschrift DE 101 16 075 C1

## Patentansprüche

1. Verfahren zur Herstellung eines Glaskörpers, insbesondere eines mit einer Glasmembran (25) versehenen Glaskörpers (20) für einen chemischen Sensor, wobei ein verschiebbar gehaltenes, von einem gasförmigen Medium durchströmbares Tauchrohr (2) in eine Glasschmelze (4) eingetaucht und wieder herausgezogen wird, um einen Glasposten (24) zu entnehmen, der anschliessend durch Zufuhr des gasförmigen Mediums in die vorgesehene Form gebracht wird, **dadurch gekennzeichnet, dass** das Tauchrohr (2) in eine Halterung (63) eingesetzt wird, die mit einem verschiebbar gelagerten Schlitten (80) verbunden ist, der anschliessend bis zu einer unteren Endposition (P1) verschoben wird, die mittels einer Einstellvorrichtung (13, 27) und/oder einer Steuervorrichtung (13, 27; 100) derart festgelegt wird, dass das Tauchrohr (2) beim manuellen oder automatischen Herunterfahren des Schlittens (80) in die Glasschmelze (4) eintaucht und beim Zurückfahren des Schlittens (80) einen zur Verarbeitung geeigneten Glasposten (24) entnimmt.

2. Verfahren nach Anspruch 1, **dadurch gekennzeichnet, dass** die untere Endposition (P1) mittels der Einstellvorrichtung (13, 27) und/oder der Steuervorrichtung (13, 27; 100) nach einer oder mehreren Entnahmen eines Glaspostens (24) manuell oder automatisch um ein bestimmtes Mass nachjustiert wird, um eine Änderung der Spiegelhöhe der Glasschmelze (4), die durch die Entnahme von Glasposten (24) verursacht wurde, zu kompensieren.

3. Verfahren nach Anspruch 1 oder 2, **dadurch gekennzeichnet, dass** der Schlitten (80) in einer oberen Endposition (P2) fixiert wird, in der das zu bearbeitende Tauchrohr (2) eingesetzt und der gefertigte Glaskörper (20) entnommen wird, wobei zur Positionierung des Tauchrohrs (2)
a) entweder ein Referenzelement (42) ausgefahren wird, welches die Sollposition des eingesetzten Tauchrohrs (2), vorzugsweise des in die Glasschmelze (4) einzutauchenden Teils des Tauchrohrs (2) anzeigt, oder
b) das gegebenenfalls mittels eines Automaten (140) in die Halterung (63) eingesetzte Tauchrohr (2) mittels einer Kamera (120) aufgenommen und entsprechende Bilddaten
b1) und eine Referenzinformation (1201) auf einer Bildausgabeeinheit (1200) angezeigt oder
b2) in der Steuereinheit (100) mit Sollwerten verglichen werden, um das Tauchrohr (2) mittels des Automaten (140) korrekt zu positionieren.

4. Verfahren nach Anspruch 1, 2 oder 3, **dadurch gekennzeichnet, dass** nach dem Positionieren des Tauchrohrs (2) eine Heizvorrichtung, vorzugsweise ein Brenner (52), gegen das in die Glasschmelze (4) einzutauchende Teil des Tauchrohrs (2) geführt wird, der dieses während einer bestimmbaren oder vorbestimmten Zeitdauer erwärmt.

5. Verfahren nach Anspruch 1, 2, 3 oder 4, **dadurch gekennzeichnet, dass** die Halterung (63) während des Erwärmens des Tauchrohrs (2) in der oberen Endposition (P2) oder nach der Entnahme und/oder während des Formens des Glaspostens (24) gedreht wird.

6. Verfahren nach einem der Ansprüche 1 bis 5, **dadurch gekennzeichnet, dass** ein vor- und zurückfahrbares Abdeckelement (32) vorgesehen ist, das über die Glasschmelze (4) geführt und, vorzugsweise gesteuert in Abhängigkeit von Sensoren (101a, ...) abgegebenen Signalen, nur dann zurück gefahren wird, wenn der Schlitten (80) gegen die untere Endposition (P1) geführt wird.

7. Verfahren nach einem der Ansprüche 1 bis 6, **dadurch gekennzeichnet, dass** die Zufuhr des gasförmigen Mediums durch die Steuereinheit (100) vorzugsweise in Abhängigkeit einer Blasdruckkurve und/oder in Abhängigkeit von mittels der Kamera (120) aufgenommenen Bilddaten, die mit Solldaten verglichen werden, gesteuert wird.

8. Verfahren nach einem der Ansprüche 1 bis 7, **dadurch gekennzeichnet, dass** der Druck des gasförmigen Mediums während des Formens des Glaspostens (24) geprüft, und beim Auftreten eines Druckabfalls ein Steuersignal abgegeben wird, mittels dessen ein Fehler registriert wird.

9. Verfahren nach einem der Ansprüche 1 bis 8, **dadurch gekennzeichnet, dass** das Tauchrohr (2) nach der Entnahme eines Glaspostens (24) aus der vertikalen Lage vorzugsweise um etwa 135° gedreht wird.

10. Vorrichtung (1) zur Herstellung eines Glaskörpers, insbesondere eines mit einer Glasmembran (25) versehenen Glaskörpers (20) für einen chemischen Sensor, mit einer an einem verschiebbar gelagerten Schlitten (80) vorgesehenen Halterung (63), mittels derer ein von einem gasförmigen Medium durchströmbares Tauchrohr (2) gehalten, in eine Glasschmelze (4) eingetaucht und wieder zurückgeführt werden kann, um einen Glasposten (24) zu entnehmen, der anschliessend durch Zufuhr des gasförmigen Mediums in die vorgesehene Form gebracht wird, **dadurch gekennzeichnet, dass** eine Einstellvorrichtung (13, 27) und/oder eine Steuervorrichtung (100) vorgesehen ist, mittels derer für den Schlitten (80) eine untere Endposition (P1) gebildet wird, die derart einstellbar ist, dass das Tauchrohr (2) beim manuellen oder automatischen Herunterfahren des Schlittens (80) in die Glasschmelze (4) eintaucht und beim Zurückfahren des Schlittens (80) einen zur Verarbeitung geeigneten Glasposten (24) entnimmt.

11. Vorrichtung (1) nach Anspruch 10, **dadurch gekennzeichnet, dass** die Einstellvorrichtung (13, 27) ein ortsfestes oder an einer wählbaren Endposition ortsfest fixierbares unteres Begrenzungselement (13) und eine mit dem unteren Begrenzungselement (13) oder dem Schlitten (80) verbundene Distanzeinstellvorrichtung (27) umfasst, mittels derer der Abstand zwischen dem unteren Begrenzungselement (13) und dem gegen das untere Begrenzungselement (13) gefahrenen Schlitten (80) und somit die untere Endposition (P1) einstellbar ist.

12. Vorrichtung (1) nach Anspruch 10 oder 11, **dadurch gekennzeichnet, dass** die untere Endposition (P1)
a) manuell mittels Betätigung der Distanzeinstellvorrichtung (27) oder
b) automatisch mittels der Steuervorrichtung (100), durch Steuerung der Distanzeinstellvorrichtung (27) oder eines mit dem Schlitten (80) verbundenen Antriebsmotors (110),
nach einer oder mehreren Entnahmen eines Glaspostens (24) um ein bestimmtes Mass nachjustiert wird, um eine Änderung der Spiegelhöhe der Glasschmelze (4), die durch die Entnahme von Glasposten (24) verursacht wurde, zu kompensieren.

13. Vorrichtung (1) nach Anspruch 10, 11 oder 12, **dadurch gekennzeichnet, dass**
a) ein ortsfestes oder ortsfest fixierbares oberes Begrenzungselement (18) vorgesehen ist, gegen das der Schlitten (80) mittels eines Zugelements (16), vorzugsweise ein Gewicht oder eine Feder, in eine obere Endposition (P2) gezogen und stabil gehalten wird, in der das zu bearbeitende Tauchrohr (2) einsetzbar und der gefertigte Glaskörper (20) entnehmbar ist, oder
b) dass die obere Endposition (P2) mittels wenigstens eines Positionssensors (101a) und der Steuervorrichtung (100) festgelegt ist, durch die der mit dem Antriebsmotor (110) versehene Schlitten (80) zwischen der oberen und der unteren Endposition (P1, P2) verschiebbar ist.

14. Vorrichtung (1) nach einem der Ansprüche 10 bis 13, **dadurch gekennzeichnet, dass**
a) ein vor- und zurückfahrbares Referenzelement (42) vorgesehen ist, welches nach dem Ausfahren die Sollposition des eingesetzten Tauchrohrs (2), vorzugsweise des in die Glasschmelze (4) einzutauchenden Teils des Tauchrohrs (2) anzeigt, so dass dieses entsprechend positionierbar ist, oder dass
b) das gegebenenfalls mittels eines Automaten (140) in die Halterung (63) eingesetzte Tauchrohr (2) mittels einer Kamera (120) aufgenommen und
b1) entsprechende Bilddaten sowie eine Referenzinformation (1201) auf einer Bildausgabeeinheit (1200) angezeigt werden, um das Tauchrohr (2) manuell zu positionieren, oder
b2) entsprechende Bilddaten in der Steuereinheit (100) mit Sollwerten verglichen werden, um das Tauchrohr (2) mittels des Automaten (140) korrekt zu positionieren.

15. Vorrichtung (1) nach einem der Ansprüche 10 bis 14, **dadurch gekennzeichnet, dass** eine vor- und zurückfahrbare Heizvorrichtung, vorzugsweise ein Brenner (52), vorgesehen ist, die, gegebenenfalls von der Steuereinheit (100) gesteuert, gegen das in die Glasschmelze (4) einzutauchende Teil des Tauchrohrs (2) führbar ist und dieses während einer bestimmbaren oder vorbestimmten Zeitdauer erwärmt.

16. Vorrichtung (1) nach einem der Ansprüche 10 bis 15, **dadurch gekennzeichnet, dass** eine Antriebseinheit (61) vorgesehen ist, die mittels einer koaxial zur Längsachse eines eingesetzten Tauchrohrs (2) ausgerichteten Antriebswelle (62) mit der Halterung (63) verbunden und derart steuerbar ist, dass die Halterung (63) in der oberen Endposition (P2), während des Erwärmens des Tauchrohrs (2), oder nach der Entnahme und/oder während des Formens des Glaspostens (24) drehbar ist.

17. Vorrichtung (1) nach Anspruch 16, **dadurch gekennzeichnet, dass** die Antriebswelle (62) mit einem Innenkanal und Öffnungen versehen ist, durch die das gasförmige Medium in das Tauchrohr (2) einführbar ist.

18. Vorrichtung (1) nach einem der Ansprüche 10 bis 17, **dadurch gekennzeichnet, dass** die Zufuhr des gasförmigen Mediums durch die Steuereinheit (100) vorzugsweise in Abhängigkeit einer Blasdruckkurve und/oder in Abhängigkeit von mittels der Kamera (120) aufgenommenen Bilddaten, die mit Solldaten verglichen werden, steuerbar ist.

19. Vorrichtung (1) nach einem der Ansprüche 10 bis 18, **dadurch gekennzeichnet, dass** der Druck des von einer Pumpvorrichtung (130) zugeführten gasförmigen Mediums während des Formens des Glaspostens (24) prüfbar, und beim Auftreten eines Druckabfalls ein Steuersignal abgebbar ist, mittels dessen ein Fehler registrierbar ist.

20. Vorrichtung (1) nach einem der Ansprüche 10 bis 19, **dadurch gekennzeichnet, dass** ein vor- und zurückfahrbares Abdeckelement (32) vorgesehen ist, das über die Glasschmelze (4) geführt und, vorzugsweise gesteuert in Abhängigkeit von Sensoren (101a, ...) abgegebenen Signalen, nur dann zurück gefahren wird, wenn der Schlitten (80) gegen die untere Endposition (P1) geführt wird.

21. Vorrichtung (1) nach einem der Ansprüche 10 bis 20, **dadurch gekennzeichnet, dass** Sensoren (101a, ...) und/oder Schalter (102a, 102b, ...) vorgesehen sind, mit denen die Antriebseinheit (61), der mit dem Schlitten (80) verbundene Antriebsmotor (110), und/oder Antriebseinheiten (30, 40, 50) steuerbar sind, mit denen das Referenzelement (42), die Heizvorrichtung (52) und gegebenenfalls das Abdeckelement (32) vor- und zurückfahrbar sind.
